# EUROPEAN PATENT SPECIFICATION

(11) **EP 3 874 236 B1**
(45) Date of publication and mention of the grant of the patent: **20.03.2024**
(21) Application number: 19794163.6
(22) Date of filing: 31.10.2019
(51) Int. Cl.: G01F 1/002, G01F 1/663, G01F 1/66, H01Q 1/22, H01Q 19/02, H01Q 21/06

(54) **METHOD AND DEVICE TO MEASURE THE VELOCITY OF A FLUID FLOWING IN A CONFINED SPACE**
VERFAHREN UND VORRICHTUNG ZUM MESSEN DER OBERFLÄCHEN-GESCHWINDIGKEIT UND DER DURCHFLUSSRATE EINES FLUIDS IN EINEM KANAL ODER EINER TEILWEISE GEFÜLLTEN ROHRLEITUNG
PROCÉDÉ ET DISPOSITIF POUR MESURER LA VITESSE SUPERFICIELLE ET LE DÉBIT D'UN FLUIDE S'ÉCOULANT DANS UN CANAL OU UNE CONDUITE PARTIELLEMENT REMPLIE

(30) Priority: 02.11.2018 EP 18204121
(43) Date of publication of application: 08.09.2021
(73) Proprietor: Flow-Tronic S.A., 4840 Welkenraedt (BE)
(72) Inventor: SEVAR, Jean-Marie, 4840 Welkenraedt (BE)
(74) Representative: AWA Benelux
(86) International application number: PCT/EP2019/079835
(87) International publication number: WO 2020/089395

(56) References cited:
- EP-A1- 0 953 827
- JP-A- 2014 160 022
- US-A- 5 315 880
- US-A1- 2017 016 984
- US-A1- 2017 336 503
- US-A1- 2018 003 535
- US-B2- 9 677 922

## Description

### FIELD OF THE INVENTION

The invention relates to a method and device to measure the surface velocity of a fluid flowing in a confined space. More specifically, the present invention relates to a non-invasive method and device with a modified microwave patch antenna.

### BACKGROUND OF THE INVENTION

Non-invasive methods for measuring the flow velocity of a fluid in a channel or sewer, i.e. methods wherein there is no contact between the probe and the fluid, are becoming more and more popular. Among the techniques used we can find acoustic methods, optical methods, laser methods and microwave methods, the last one being the most popular.

For example, the documents US 9 677 922, US 2017/016984, US 5 315 880 and US 2018/003535 relate to a fill level measurement device for determining a distance from a medium and a flow speed of the medium by evaluating a transmission signal emitted by the fill level measurement device and reflected by the medium.

Most sewer pipes and channels as well as most industrial waste water channels are located underground and consequently are in confined space. The non-invasive microwave technology is ideal to measure the fluid velocity in those applications. Microwave signals can be generated in different ways. Pulsed radars with horn antennas were historically used for fluid velocity measurements. Horn antennas used in Pulsed Radar systems have one horn (one antenna) being used for both transmitting and receiving the signals. The microwave transducer is mounted on the base of the horn antenna. Horn antennas have the advantage to be very directional with low energy side lobes which don't interact with the narrow environment in a confined space. The document EP 0 953 827 discloses an apparatus for measuring the flow velocity of a fluid flowing through a pipe using a horn antenna.

Over time due to traffic control and applications in the automobile industry another type of antenna has become very popular, the strip antenna or patch antenna or more exactly the patch array antenna 1 using a number of patches 2 which are interconnected (FIG.1 and FIG.2). The patch antenna 1 usually works as a Continuous Wave Radar with one set of patches building the transmitter antenna 1a and another set of patches building the receiver antenna 1b. The transmitter part sends out microwave energy continuously while the receiver is receiving the backscattered radiation from the fluid surface to be measured. Patch antennas with transmitter and separate receiver can be controlled to work as pulsed radar as well in order to save energy for example. They have the advantage to be less expensive than the horn antennas but the drawback to have a broader aperture angle θ and side lobes 5 with stronger energy as schematised in figures 3 and 13a. Those side lobes can negatively influence their use in confined spaces by increasing the noise level and sometimes catching wrong velocity signals that are difficult or impossible to eliminate.

The document US 2017/336503 relates to object-detection sensors that rely on radio signals to determine the position and/or the speed of movable objects. The device is more specifically adapted for automotive applications. One or more waveguides are used to guide the radio signal generated by a transmitter circuit into the proximity, for example, in the range of millimeters or a few centimeters, of the movable object. The radio signal can be reflected from the movable object. The reflected radio signal can then be guided back to a receiver circuit by employing one or more waveguides as well.

The document JP 2014 160022 relates to a device to measure the distance between two moving bodies such as self-propelled cranes moving in a factory so that one crane and the other crane do not collide with each other. At the time of mounting the antenna of the transmitting/receiving means are placed so as to face each other accurately to align the axes. A misalignment can occur in case of vibration. To overcome this problem, corner reflector is used as reflecting means to enhance the directivity of the signal.

### SUMMARY OF THE INVENTION

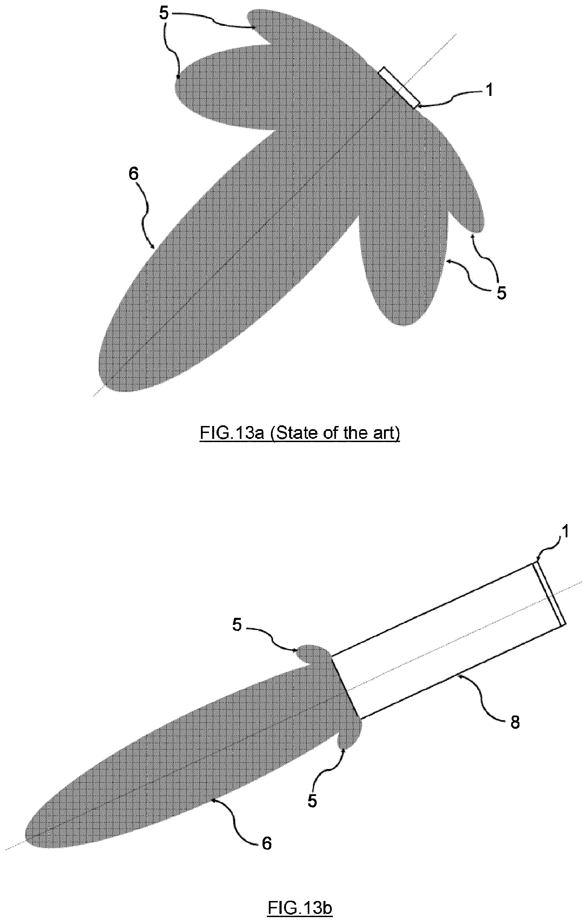

The present invention aims to provide an improved non-invasive method and device for measuring the velocity of a fluid flowing in a confined space such as a sewer or an underground channel, using a patch antenna as microwave transmitter and receiver. To this end, at least the transmitting area of the patch antenna is mounted at one end of a reflector tube. The other end of the tube is left open or equipped with a microwave lens. This device with the reflector tube allows to encapsulate the side lobes of the microwave pattern (fig.13b) and redirect them towards the portion of the fluid that requires to be illuminated for the flow velocity measurement. The reduction of the side lobes allows to prevent their reflection of the walls of the pipe or channel, such a reflection resulting in an important noise impairing the accuracy of the measurement. Optionally, as aforementioned, the other open end may be equipped with a microwave lens. This lens could reduce potential side lobes formed at the exit of the reflector tube.

The reflector tube has a constant cross section over its length or a cross section expanding gradually over its length. This geometry allows to reduce or even annihilate the side lobes but does not affect significantly the directivity of the signal.

### BRIEF DESCRIPTION OF THE DRAWINGS

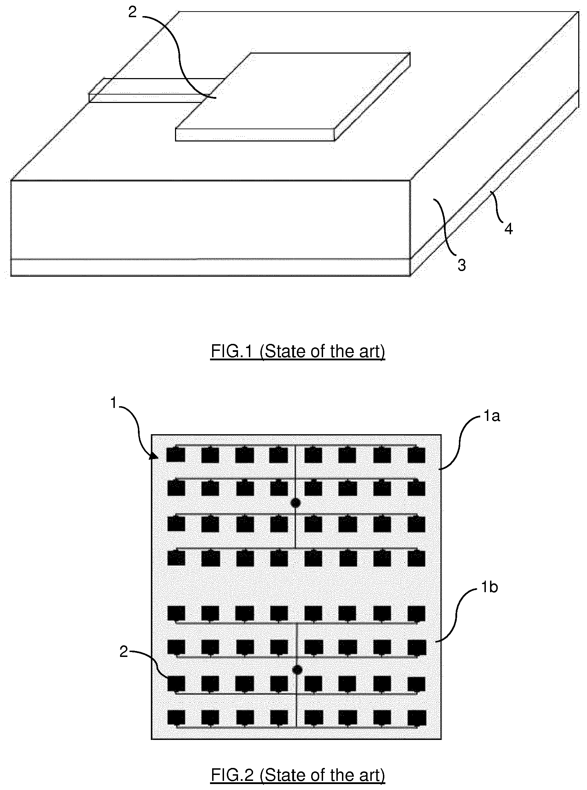

Figure 1 represents one patch of a patch antenna according to the state of the art.
Figure 2 represents according to the state of the art a patch antenna with one set of patches building the transmitter antenna and another set of patches building the receiver antenna.

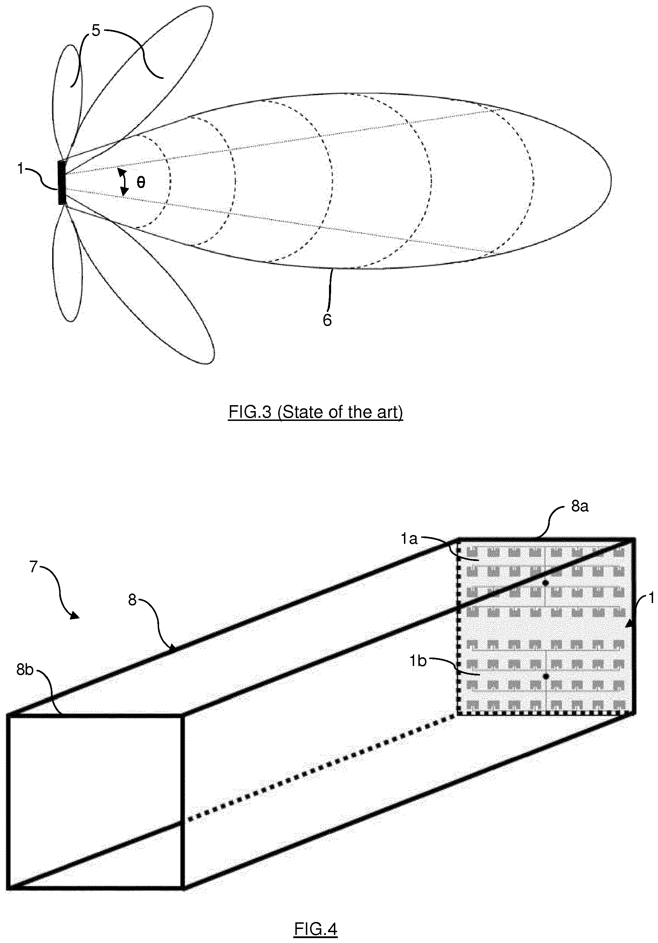

Figure 3 schematically represents the pattern of an anisotropic antenna according to the state of the art.
Figures 4-10 and 12 represent different variants of the device according to the invention for measuring the fluid velocity.

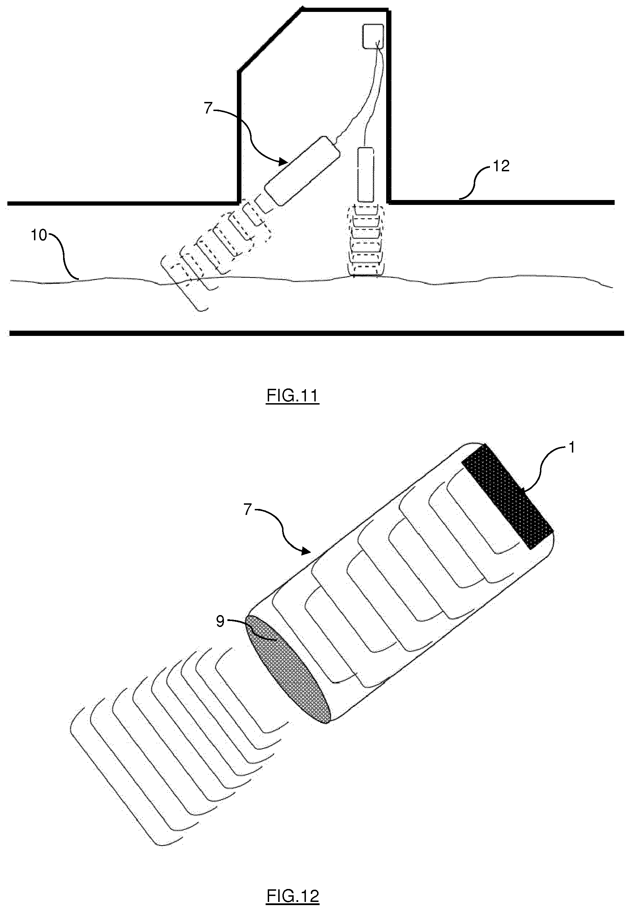

Figure 11 schematically represents the devices according to the invention located in a confined space for measuring the fluid velocity.
Figures 13a and 13b illustrate the effect of the reflector tube on the side lobes of the microwave pattern.

### DESCRIPTION OF THE INVENTION

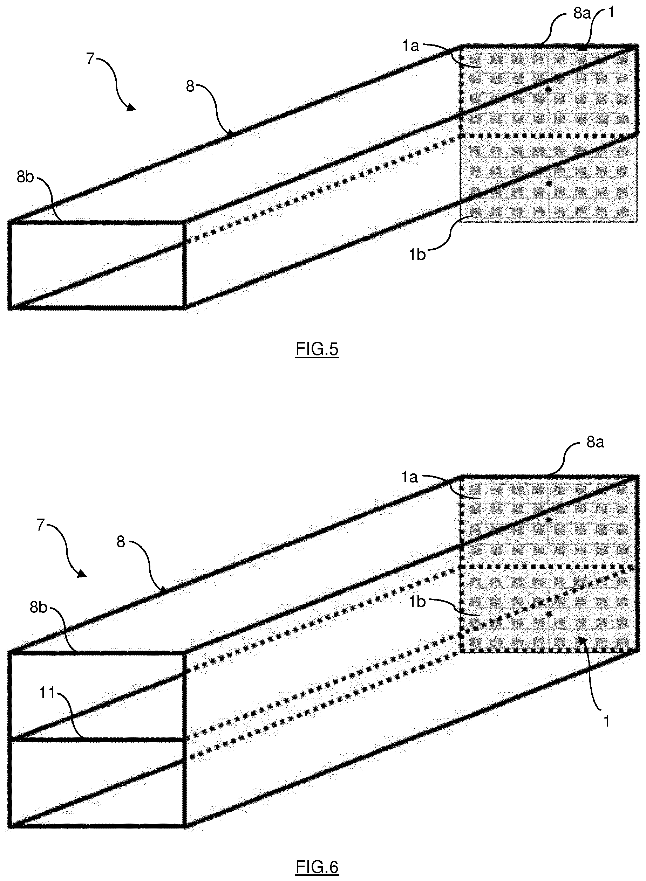

The invention relates to a non-invasive method and a device for measuring the surface velocity of a fluid flowing more specifically in a confined space. However, the present invention does not exclude to use this device for measurements in open air for rivers, irrigation channels and other large man-made channels. The device 7 comprises a patch antenna 1 with a set of interconnected patches acting as a microwave transmitter 1a and another set of interconnected patches acting as a microwave receiver 1b (FIG.4-10). As shown in figures 4 or 5, at least the set of patches acting as the transmitter 1a is mounted at one end 8a of a reflector tube 8. This tube is electrically conductive and for example in metal. The other end 8b of the reflector tube 8 is left open or might be equipped with a microwave lens 9 as illustrated in figure 12. The transmitted microwave signal is guided through this electrically conductive tubular shaped volume to the surface of the fluid 10 as represented in figure 11. This guidance through the tube allows avoiding faulty measurements on walls and other objects inside the sewer or channel.

The dimensions from the tube section can be equal or larger than the dimensions of the whole patch antenna including the transmitter and receiver as shown in figures 4 or 6. In figure 6, there is an additional electrically conductive separation 11 inside the tube 8 between the transmitting antenna 1a and the receiving antenna 1b. According to a variant, the dimensions from the tube section can be equal or larger than the dimensions of the transmitting part 1a only, leaving the receiver part 1b free (FIG.5).

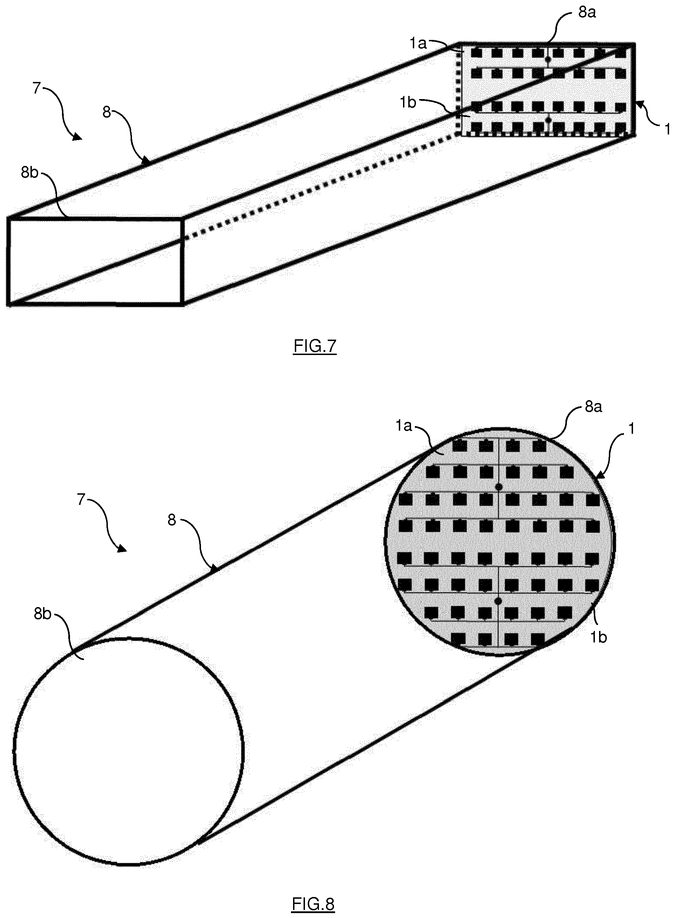

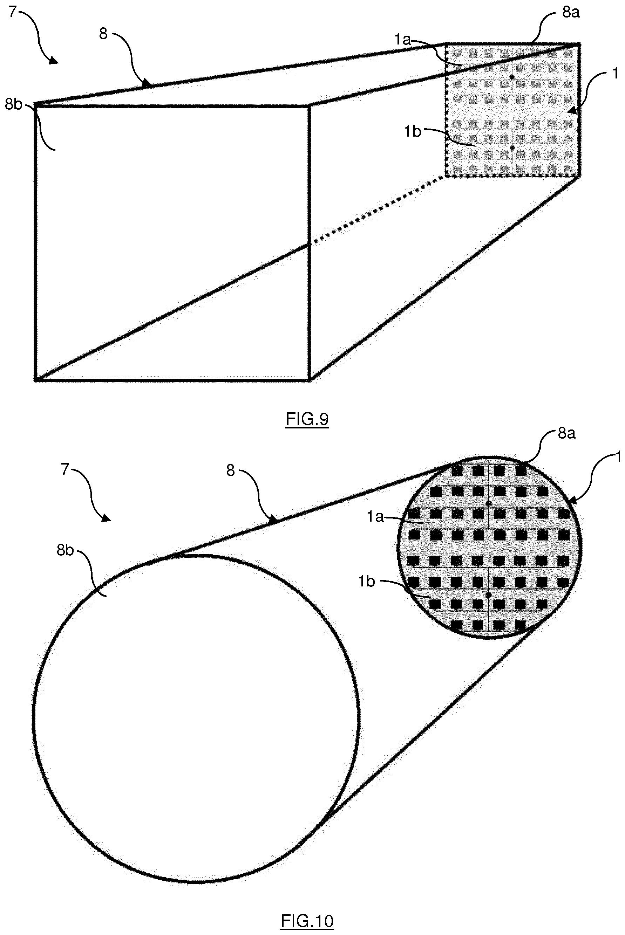

Depending on the dimensions and shape from the patch antenna the shape of the reflector tube can be square with parallel faces (FIG.4), or rectangular with parallel faces (FIG.7), or cylindrical (FIG.8). In an alternate embodiment, instead of having parallel faces the shape of the reflector tube can be pyramidal (FIG.9) or conical (FIG 10) with a cross section of the tube increasing from the patch antenna to the exit of the tube.

Preferably, the length of the reflector tube is a multiple of the wavelength (3, 6, or 12 times lambda) from the transmitting microwave frequency for a better guidance of the wave through the tube and to prevent the formation of side lobes at the exit of the tube.

Using the device according to the invention, the non-invasive method for measuring the fluid velocity flowing through a pipe or channel comprises the following steps:
(a) Generating a microwave frequency signal by using the patch antenna described above,
(b) Forcing transmitted microwave signal through the reflector tube to modify the antenna pattern,
(c) Directing the transmitted microwave signal towards the surface of the fluid preferably at an acute angle,
(d) Detecting the microwave signal reflected from the fluid surface,
(e) Determining from the transmitted and reflected signals the Doppler frequency shift to calculate the surface velocity of the fluid. Indeed, as well known, the signals reflected by the surface of the liquid in motion have a frequency shift due to the Doppler effect that is directly proportional to the movement velocity of the particles and waves of the surface of the liquid generating the reflected signals.

Then different steps known from the prior art may be carried out to determine the mean velocity of the fluid into the channel based on the surface velocity of the fluid. Indeed, within a pipe traveled by a fluid, there is a velocity gradient both in the horizontal direction and the vertical direction of the wet straight section, the velocity being theoretically close to zero at the walls of the pipe. The steps may consist in applying multiplier factors on the measured surface velocity, the multiplier factors depending on the level of fluid in the pipe and being determined based on previous calibration or mathematical models. The last ones may be based on finite element models as described in the patent EP 0 681 683 B1. It simulates a set of flow-velocity distributions in a channel having a known profile, for several liquid levels in the channel. Based on a measurement of the liquid level and a velocity measurement, it next selects the simulated velocity distribution that is appropriate for the measured liquid level. On this based, a mean velocity is determined.

Preferred alternative steps for converting a surface velocity into a mean velocity are described in the document EP 3 011 278. They are the following. Each reflected pulse generates a measurement datum. The number of reflected pulses in a sequence of measurements will generate a complex mosaic of discrete data expressed in amplitude as a function of time. The spectrum of data expressed in the temporal domain is transformed into a frequency domain via a discrete Fourier transform (DFT), and preferably, a fast Fourier transform (FFT). Then a Gaussian curve is fitted on the spectrum of discrete data expressed in the frequency domain and the parameters of the Gaussian curve, namely the mean µ and the standard deviation σ, are calculated. The frequency of the mean µ and the standard deviation σ allow respectively to calculate the mean surface velocity over the illuminated zone and the velocity distribution over that same zone. It has been shown that the velocity distribution at the free surface of the liquid is representative of the vertical velocity distribution in the wet section. The mean velocity within the wet section can therefore be deduced from the mean velocity and thus the mean µ at the surface of the liquid. However, the illuminated zone may not have a sufficient size to be representative of the entire velocity distribution at the free surface of the liquid. Thus, depending on the size of the illuminated zone, the mean velocity within the pipe may be deduced directly from the mean velocity measured at the surface or indirectly via corrections or extrapolations as further explained in this document EP 3 011 278.

On this basis, the flow rate Q in the pipe or channel can be determined. It is equaled to the wet area area A multiplied by the average velocity V. To calculate the wet area, the level in the pipe or channel is measured and associated with the channel or pipe shape.

### Legend

(1) Patch antenna
   a. Transmitting area
   b. Receiving area
(2) Patch
(3) Dielectric
(4) Ground
(5) Side lobe
(6) Main lobe
(7) Device
(8) Reflector tube
   a. One end
   b. Other end
(9) Microwave lens
(10) Fluid
(11) Plate or separation
(12) Pipe, channel or sewer

## Claims

1. A device (7) for measuring the surface velocity of a fluid (10) flowing in a confined space such as through a pipe or a channel (12), said device (7) comprising a patch antenna (1) with a transmitting area (1a) generating a microwave signal and a receiving area (1b) receiving the microwave signal reflected on the surface of the fluid (10), the device (7) further comprising an electrically conductive tube (8), called reflector tube, with at least the transmitting area (1a) of the patch antenna (1) mounted at one end (8a) of the reflector tube (8) in order to reduce the side lobes (5) of the generated microwave signal, said reflector tube (8) having a constant cross section over its length or a cross section expanding gradually over its length from the patch antenna (1) to the exit of the reflector tube (8).

2. Device (7) as in claim 1, **characterized in that** the cross section of the reflector tube (8) at said one end (8a) covers both the transmitting area (1a) and the receiving area (1b).

3. Device (7) as in claim 2, **characterized in that** it comprises an electrically conductive plate (11) extending along the reflector tube (8) to separate the transmitting area (1a) from the receiving area (1b).

4. Device (7) as in claim 1, **characterized in that** the cross section of the reflector tube (8) at said one end (8a) only covers the transmitting area (1a).

5. Device (7) as in any of the previous claims, **characterized in that** the reflector tube (8) has a square section with parallel faces over its length.

6. Device (7) as in any of claims 1 to 4, **characterized in that** the reflector tube (8) has a rectangular section with parallel faces over its length.

7. Device (7) as in any of claims 1 to 4, **characterized in that** the reflector tube (8) has a circular section and cylindrical shape over its length.

8. Device (7) as in any of claims 1 to 4, **characterized in that** the reflector tube (8) has a pyramidal shape over its length with the cross section of the reflector tube (8) expanding from the patch antenna (1) to the exit of the reflector tube (8).

9. Device (7) as in any of claims 1 to 4, **characterized in that** the reflector tube (8) has a conical shape over its length with the cross section of the reflector tube (8) expanding from the patch antenna (1) to the exit of the reflector tube (8).

10. Device (7) as in any of the previous claims, **characterized in that** the length of the reflector tube (8) is a multiple of a wavelength of the generated microwave signal.

11. Device (7) as in claim 10, **characterized in that** the length of the reflector tube (8) is equal to 3, 6 or 12 times the wavelength of the generated microwave signal.

12. Device (7) as in any of the previous claims, **characterized in that** the other open end (8b) of the reflector tube (8) is equipped with a microwave lens (9).

13. A non-invasive method for measuring a surface velocity of a fluid (10) flowing a confined space such as through a pipe or channel (12), comprising the steps of
(a) Generating a microwave signal by using a patch antenna (1) comprising an array of patches (2) interconnected forming a transmitting area (1a) and another array of patches (2) interconnected forming a receiving area (1b);
(b) Forcing the generated microwave signal through a reflector tube (8) to modify the pattern of the generated microwave signal, said reflector tube (8) having a constant cross section over its length or a cross section expanding gradually over its length from the patch antenna (1) to the exit of the reflector tube (8);
(c) Directing the generated microwave signal towards the surface of the fluid (10);
(d) Detecting the microwave signal reflected from the surface of the fluid (10);
(e) Determining from the generated microwave signal and the reflected microwave signal a Doppler frequency shift to calculate the surface velocity of the fluid (10).

14. Non-invasive method as in claim 13, further comprising a step (f) consisting in converting the surface velocity of the fluid (10) to produce a mean velocity of the fluid (10) through the pipe or the channel (12).

15. Non-invasive method as in claim 14, further comprising a step (g) consisting in determining a flow rate of the fluid (10) through the pipe or the channel (12), said flow rate being equaled to the mean velocity multiplied by a wet area in the pipe or the channel (12).

## Patentansprüche

1. Eine Vorrichtung (7) zum Messen der Oberflächengeschwindigkeit eines Fluids (10), das in einem begrenzten Raum strömt, wie z. B. durch ein Rohr oder einen Kanal (12), die besagte Vorrichtung (7) umfassend eine Patchantenne (1) mit einem Sendebereich (1a), der ein Mikrowellensignal erzeugt, und einem Empfangsbereich (1b), der das an der Oberfläche des Fluids (10) reflektierte Mikrowellensignal empfängt, die Vorrichtung (7) ferner umfassend ein elektrisch leitendes Rohr (8), das Reflektorrohr genannt wird, wobei mindestens der Sendebereich (1a) der Patchantenne (1) an einem Ende (8a) des Reflektorrohrs (8) montiert ist, um die Nebenkeulen (5) des erzeugten Mikrowellensignals zu reduzieren, wobei das besagte Reflektorrohr (8) über seine Länge einen konstanten Querschnitt oder einen Querschnitt aufweist, der sich über seine Länge von der Patchantenne (1) bis zum Ausgang des Reflektorrohrs (8) allmählich erweitert.

2. Vorrichtung (7) nach Anspruch 1, **dadurch gekennzeichnet, dass** der Querschnitt des Reflektorrohrs (8) an dem besagten einen Ende (8a) sowohl den Sendebereich (1a) als auch den Empfangsbereich (1b) abdeckt.

3. Vorrichtung (7) nach Anspruch 2, **dadurch gekennzeichnet, dass** sie eine elektrisch leitende Platte (11), die sich entlang des Reflektorrohrs (8) erstreckt, umfasst um den Sendebereich (1a) von dem Empfangsbereich (1b) zu trennen.

4. Vorrichtung (7) nach Anspruch 1, **dadurch gekennzeichnet, dass** der Querschnitt des Reflektorrohrs (8) an dem besagten einen Ende (8a) nur den Sendebereich (1a) abdeckt.

5. Vorrichtung (7) nach irgendeinem der vorherigen Ansprüche, **dadurch gekennzeichnet, dass** das Reflektorrohr (8) einen quadratischen Querschnitt mit parallelen Seiten über seine Länge aufweist.

6. Vorrichtung (7) nach einem der Ansprüche 1 bis 4, **dadurch gekennzeichnet, dass** das Reflektorrohr (8) einen rechteckigen Querschnitt mit parallelen Seiten über seine Länge aufweist.

7. Vorrichtung (7) nach einem der Ansprüche 1 bis 4, **dadurch gekennzeichnet, dass** das Reflektorrohr (8) einen kreisförmigen Querschnitt und eine zylindrische Form über seine Länge aufweist.

8. Vorrichtung (7) nach einem der Ansprüche 1 bis 4, **dadurch gekennzeichnet, dass** das Reflektorrohr (8) über seine Länge eine pyramidenförmige Form aufweist, wobei sich der Querschnitt des Reflektorrohrs (8) von der Patchantenne (1) zu dem Ausgang des Reflektorrohrs (8) hin erweitert.

9. Vorrichtung (7) nach einem der Ansprüche 1 bis 4, **dadurch gekennzeichnet, dass** das Reflektorrohr (8) über seine Länge eine konische Form aufweist, wobei sich der Querschnitt des Reflektorrohrs (8) von der Patchantenne (1) zu dem Ausgang des Reflektorrohrs (8) hin erweitert.

10. Vorrichtung (7) nach einem der vorherigen Ansprüche, **dadurch gekennzeichnet, dass** die Länge des Reflektorrohrs (8) ein Vielfaches einer Wellenlänge des erzeugten Mikrowellensignals ist.

11. Vorrichtung (7) nach Anspruch 10, **dadurch gekennzeichnet, dass** die Länge des Reflektorrohrs (8) gleich wie das 3-, 6- oder 12-fache der Wellenlänge des erzeugten Mikrowellensignals ist.

12. Vorrichtung (7) nach einem der vorherigen Ansprüche, **dadurch gekennzeichnet, dass** das andere offene Ende (8b) des Reflektorrohrs (8) mit einer Mikrowellenlinse (9) ausgestattet ist.

13. Ein nicht-invasives Verfahren zum Messen einer Oberflächengeschwindigkeit eines Fluids (10), das in einem begrenzten Raum strömt, wie beispielsweise durch ein Rohr oder einen Kanal (12), umfassend die folgenden Schritte
(a) Erzeugen eines Mikrowellensignals unter Verwendung einer Patchantenne (1), umfassend eine Anordnung von Patches (2), die miteinander verbunden sind und einen Sendebereich (1a) bilden, und eine weitere Anordnung von Patches (2), die miteinander verbunden sind und einen Empfangsbereich (1b) bilden;
(b) Zwingen des erzeugten Mikrowellensignals durch ein Reflektorrohr (8), um das Muster des erzeugten Mikrowellensignals zu modifizieren, wobei das besagte Reflektorrohr (8) einen konstanten Querschnitt über seine Länge oder einen Querschnitt aufweist, der sich allmählich über seine Länge von der Patchantenne (1) zu dem Ausgang des Reflektorrohrs (8) erweitert;
(c) Richten des erzeugten Mikrowellensignals auf die Oberfläche des Fluids (10);
(d) Erfassen des Mikrowellensignals (10), das von der Oberfläche des Fluids reflektiert wird;
(e) Bestimmen, anhand des erzeugten Mikrowellensignals und des reflektierten Mikrowellensignals einer Doppler-Frequenzverschiebung, um die Oberflächengeschwindigkeit des Fluids (10) zu berechnen.

14. Nicht-invasives Verfahren nach Anspruch 13, ferner umfassend einen Schritt (f), der darin besteht, die Oberflächengeschwindigkeit des Fluids (10) umzuwandeln, um eine mittlere Geschwindigkeit des Fluids (10) durch das Rohr oder den Kanal (12) zu hervorzubringen.

15. Nicht-invasives Verfahren nach Anspruch 14, ferner umfassend einen Schritt (g), der darin besteht, eine Durchflussrate des Fluids (10) durch das Rohr oder den Kanal (12) zu bestimmen, wobei die besagte Durchflussrate gleich der mittleren Geschwindigkeit multipliziert mit einer benetzten Fläche in dem Rohr oder dem Kanal (12) angesetzt wird.

## Revendications

1. Dispositif (7) permettant de mesurer la vitesse de surface d'un fluide (10) s'écoulant dans un espace confiné tel qu'à travers un tuyau ou un canal (12), ledit dispositif (7) comprenant une antenne à plaque (1) avec une zone de transmission (1a) générant un signal hyperfréquences et une zone de réception (1b) recevant le signal hyperfréquences réfléchi sur la surface du fluide (10), le dispositif (7) comprenant en outre un tube électroconducteur (8), appelé tube réflecteur, au moins la zone de transmission (1a) de l'antenne à plaque (1) étant montée au niveau d'une extrémité (8a) du tube réflecteur (8) afin de réduire les lobes latéraux (5) du signal hyperfréquences généré, ledit tube réflecteur (8) ayant une section transversale constante sur sa longueur ou une section transversale s'étendant progressivement sur sa longueur depuis l'antenne à plaque (1) jusqu'à la sortie du tube réflecteur (8).

2. Dispositif (7) selon la revendication 1, **caractérisé en ce que** la section transversale du tube réflecteur (8) au niveau de ladite une extrémité (8a) couvre à la fois la zone de transmission (1a) et la zone de réception (1b).

3. Dispositif (7) selon la revendication 2, **caractérisé en ce qu'**il comprend une plaque électroconductrice (11) s'étendant le long du tube réflecteur (8) pour séparer la zone de transmission (1a) de la zone de réception (1b).

4. Dispositif (7) selon la revendication 1, **caractérisé en ce que** la section transversale du tube réflecteur (8) au niveau de ladite une extrémité (8a) couvre uniquement la zone de transmission (1a).

5. Dispositif (7) selon l'une quelconque des revendications précédentes, **caractérisé en ce que** le tube réflecteur (8) a une section carrée avec des faces parallèles sur sa longueur.

6. Dispositif (7) selon l'une quelconque des revendications 1 à 4, **caractérisé en ce que** le tube réflecteur (8) a une section rectangulaire avec des faces parallèles sur sa longueur.

7. Dispositif (7) selon l'une quelconque des revendications 1 à 4, **caractérisé en ce que** le tube réflecteur (8) a une section circulaire et une forme cylindrique sur sa longueur.

8. Dispositif (7) selon l'une quelconque des revendications 1 à 4, **caractérisé en ce que** le tube réflecteur (8) a une forme pyramidale sur sa longueur, la section transversale du tube réflecteur (8) s'étendant depuis l'antenne à plaque (1) jusqu'à la sortie du tube réflecteur (8).

9. Dispositif (7) selon l'une quelconque des revendications 1 à 4, **caractérisé en ce que** le tube réflecteur (8) a une forme conique sur sa longueur, la section transversale du tube réflecteur (8) s'étendant depuis l'antenne à plaque (1) jusqu'à la sortie du tube réflecteur (8).

10. Dispositif (7) selon l'une quelconque des revendications précédentes, **caractérisé en ce que** la longueur du tube réflecteur (8) est un multiple d'une longueur d'onde du signal hyperfréquences généré.

11. Dispositif (7) selon la revendication 10, **caractérisé en ce que** la longueur du tube réflecteur (8) est égale à 3, 6 ou 12 fois la longueur d'onde du signal hyperfréquences généré.

12. Dispositif (7) selon l'une quelconque des revendications précédentes, **caractérisé en ce que** l'autre extrémité ouverte (8b) du tube réflecteur (8) est équipée d'une lentille hyperfréquences (9).

13. Procédé non invasif permettant de mesurer une vitesse de surface d'un fluide (10) s'écoulant dans un espace confiné tel qu'à travers un tuyau ou un canal (12), comprenant les étapes de
(a) génération d'un signal hyperfréquences à l'aide d'une antenne à plaque (1) comprenant un réseau de plaques (2) interconnectées formant une zone de transmission (1a) et un autre réseau de plaques (2) interconnectées formant une zone de réception (1b) ;
(b) forçage du signal hyperfréquences généré à travers un tube réflecteur (8) pour modifier le motif du signal hyperfréquences généré, ledit tube réflecteur (8) ayant une section transversale constante sur sa longueur ou une section transversale s'étendant progressivement sur sa longueur depuis l'antenne à plaque (1) jusqu'à la sortie du tube réflecteur (8) ;
(c) orientation du signal hyperfréquences généré vers la surface du fluide (10) ;
(d) détection du signal hyperfréquences réfléchi à partir de la surface du fluide (10) ;
(e) détermination à partir du signal hyperfréquences généré et du signal hyperfréquences réfléchi d'un décalage de fréquence par effet Doppler pour calculer la vitesse de surface du fluide (10).

14. Procédé non invasif selon la revendication 13, comprenant en outre une étape (f) consistant à convertir la vitesse de surface du fluide (10) pour produire une vitesse moyenne du fluide (10) à travers le tuyau ou le canal (12).

15. Procédé non invasif selon la revendication 14, comprenant en outre une étape (g) consistant à déterminer un débit du fluide (10) à travers le tuyau ou le canal (12), ledit débit étant égal à la vitesse moyenne multipliée par une zone humide dans le tuyau ou le canal (12).
